(19) Europäisches Patentamt
European Patent Office
Office européen des brevets

(11) Veröffentlichungsnummer : **0 106 128**
**B1**

(12) # EUROPÄISCHE PATENTSCHRIFT

(45) Veröffentlichungstag der Patentschrift : **16.04.86**

(51) Int. Cl.[4] : **C 08 F299/02**, C 09 D 3/48, C 09 D 5/44

(21) Anmeldenummer : **83108873.7**

(22) Anmeldetag : **08.09.83**

(54) **Verkappte Isocyanatgruppen enthaltendes Lackbindemittel und seine Verwendung für die kathodische Elektrotauchlackierung.**

(30) Priorität : **17.09.82 DE 3234491**

(43) Veröffentlichungstag der Anmeldung : **25.04.84 Patentblatt 84/17**

(45) Bekanntmachung des Hinweises auf die Patenterteilung : **16.04.86 Patentblatt 86/16**

(84) Benannte Vertragsstaaten : **AT BE DE FR GB IT NL**

(56) Entgegenhaltungen :
**DE-A- 3 133 770**
**FR-A- 2 311 046**
**FR-A- 2 361 449**
**US-A- 4 085 161**

(73) Patentinhaber : **BASF Aktiengesellschaft**
**Carl-Bosch-Strasse 38**
**D-6700 Ludwigshafen (DE)**

(72) Erfinder : **Gimpel, Juergen, Dr.**
**Osloer Weg 44**
**D-6700 Ludwigshafen (DE)**
Erfinder : **Schwendemann, Volker, Dr.**
**Hauptstrasse 64 a**
**D-6901 Wiesenbach (DE)**
Erfinder : **Gulbins, Erich, Dr.**
**Ladenburger Strasse 80**
**D-6900 Heidelberg (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 106 128 B1

**Beschreibung**

Die vorliegende Erfindung betrifft Lackbindemittel auf Basis tertiäre Aminogruppen, verkappte Isocyanatgruppen, Hydroxyl- und Ethergruppen enthaltender Copolymerisate und deren Verwendung für die Elektrotauchlackierung.

Bindemittel auf Basis von Acrylatharzen, die durch Isocyanate vernetzt werden, sind für die Elektrotauchlackierung bekannt. So wird in der US-A-3 883 483 eine kathodisch abscheidbare Polymerzusammensetzung beschrieben, die das Umsetzungsprodukt eines halbseitig verkappten Diisocyanats mit einer ethylenisch ungesättigten Hydroxylverbindung wie Hydroxyethylacrylat enthält. Auf diese Weise ist jedoch die für die Vernetzung erforderliche Isocyanatgruppe über eine Esterbindung an die Kohlenstoffkette des Polymers gebunden. Ein Teil der Esterbindungen wird durch Hydrolyse bei der Badalterung des Elektrotauchlacks gespalten. Dadurch wird die Zusammensetzung der für die Vernetzung erforderlichen Bestandteile im Laufe der Badalterung geändert. Dies führt zu einer Verschlechterung der chemischen Beständigkeit und des Korrosionsschutzes der abgeschiedenen Lacke.

Die US-A-3 976 615 bezieht sich auf Bindemittel für Elektrotauchlacke auf der Basis von Polyethern, die 1,2 bis 2 ungesättigte Ethergruppen pro Molekül enthalten und mit ungesättigten Monomeren, die Aminogruppen enthalten, z. B. mit Dimethylaminoethylmethacrylat, copolymerisiert werden. Als Vernetzer werden N-Alkoxymethyl(meth)acrylamide, Phenoplaste oder Aminoplaste genannt. Durch diese Vernetzer werden die Elektrotauchbäder jedoch sehr spannungsempfindlich. Wird auf diese Vernetzer verzichtet, sind die Beständigkeit gegenüber Chemikalien und die mechanischen Eigenschaften der Lacküberzüge nicht mehr ausreichend.

In der US-A-4 085 161 werden Bindemittel für Elektrotauchlacke auf der Basis von Polyethern beschrieben, die 1,2 bis 2 ungesättigte Ethergruppen pro Molekül enthalten und mit ungesättigten Monomeren, die Aminogruppen enthalten, copolymerisiert werden. Als Vernetzer enthält das Copolymere eine verkapptes Di- oder Polyisocyanat, bei dem eine NCO-Gruppe mit einer ethylenisch ungesättigten Hydroxylverbindung, wie Hydroxyethylacrylat umgesetzt wurde. Dies bedingt die oben schon erwähnten Schwierigkeiten bei der Badalterung.

Der EP 39 425 sind Bindemittel für Elektrotauchlacke auf der Basis von Polyethern zu entnehmen, deren endständige Epoxidgruppen mit primären Aminen umgesetzt werden. Die so erhaltenen Produkte mit mindestens einer sekundären Aminogruppe werden mit einer Verbindung mit einer Epoxigruppe und einer copolymerisierbaren olefinischen Doppelbindung umgesetzt und anschließend copolymerisiert. Als Vernetzer für die nach diesem sehr aufwendigen präparativen Verfahren hergestellte Copolymerisate werden N-Alkoxymethyl(meth)acrylamide, Phenoplaste oder Aminoplaste verwendet, die im Laufe der Badalterung ihre Reaktivität verlieren.

In DE-A-3 133 770.8 werden Bindemittel für Elektrotauchlacke beschrieben, die verkappte N-(1-alkenyl)-isocyanate und allyl/acrylmodifizierte Polyether als Comonomere enthalten. Die Pigmentbenetzung, der Korrosionsschutz und die Naßfilmhaftung dieser Elektrotauchlacke sollte verbessert werden.

Der vorliegenden Erfindung lag die Aufgabe zugrunde, Lackbindemittel für Elektrotauchlacke aufzuzeigen, die Überzüge mit gutem Korrosionsschutz ergeben und deren Bäder auch im pigmentierten Zustand ausreichende Badstabilität aufweisen.

Weiterhin sollen die Bindemittel eine gute Pigmentbenetzung und Naßfilmhaftung aufweisen.

Diese Bindemittel sollen für die Vernetzungsreaktion eine definierte Menge an verkappten Isocyanatgruppen enthalten, die direkt an die Kohlenstoffkette des Polymeren gebunden sind, wobei im Polymermolekül gegebenenfalls noch andere reaktive Gruppen enthalten sein können, so daß die Polymere als selbst- und fremdvernetzende Bindemittel eingesetzt werden können.

Es wurde gefunden, daß sich diese Aufgabe sehr vorteilhaft durch Copolymerisate lösen läßt, die neben dem verkappten N-(1-alkenyl)-isocyanat modifizierte Epoxidharze auf Basis Bisphenol A einpolymerisiert enthalten, wobei ein Teil der Epoxidgruppen mit einer olefinisch ungesättigten Carbonsäure verestert ist und der Rest der Epoxidgruppen mit einem sekundären Amin und gegebenenfalls mit einer aliphatischen Monocarbonsäure umgesetzt wurde.

Gegenstand der vorliegenden Erfindung ist ein Lackbindemittel auf Basis eines tertiäre Aminogruppen, verkappte Isocyanatgruppen, Hydroxyl- und Ethergruppen enthaltenden Copolymerisats, das durch zumindest teilweise Salzbildung mit einer Säure wasserlöslich oder wasserdispergierbar ist, das dadurch gekennzeichnet ist, daß das Copolymerisat einpolymerisiert enthält:

(A) 6 bis 22 Gew.% mindestens einer olefinisch ungesättigten Verbindung, die eine tertiäre Aminogruppe enthält,

(B) 10 bis 35 Gew.% eines mit einem CH-, OH- oder NH-aciden Verkappungsmittel verkappten N-(1-alkenyl)-isocyanats,

(C) 30 bis 60 Gew.% eines Addukts aus

(a) einem Epoxidharz auf der Basis von Bisphenol A und Epichlorhydrin mit einem Molekulargewicht zwischen 300 und 3 500,

(b) einer polymerisierbaren olefinisch ungesättigten Carbonsäure mit 3 bis 20 Kohlenstoffatomen,

(c) einem sekundären Amin und gegebenenfalls

(d) einer gesättigten aliphatischen Monocarbonsäure mit 1 bis 20 Kohlenstoffatomen,

wobei 10 bis 50 Mol.% der Epoxidgruppen des Epoxidharzes (a) mit einer polymerisierbaren olefinisch ungesättigten Monocarbonsäure verestert, 10 bis 50 Mol.% der Epoxidgruppen mit einem sekundären Amin umgesetzt und gegebenenfalls bis zu 80 Mol.% der Epoxidgruppen mit einer aliphatischen Monocarbonsäure verestert sind,

(D) 0 bis 54 Gew.% einer oder mehrerer unter (A) bis (C) nicht genannter copolymerisierbarer olefinisch ungesättigter Verbindungen, mit der Maßgabe, daß das Copolymerisat ein mittleres Molekulargewicht zwischen 1 000 und 20 000 aufweist und die Summe der unter (A) bis (D) genannten Prozentzahlen 100 ist.

Gegenstand der vorliegenden Erfindung ist außerdem die Verwendung dieser Lackbindemittel als selbstvernetzende Bindemittel oder in Kombination mit einem polyfunktionellen Vernetzungsmittel als fremdvernetzende Bindemittel für die kathodische Elektrotauchlackierung metallischer Gegenstände.

Der aus dem erfindungsgemäßen Lackbindemittel hergestellte Elektrotauchlack enthält im allgemeinen 5 bis 20 Gew.% des protonierten erfindungsgemäßen Copolymerisats.

Zu den Aufbaukomponenten des erfindungsgemäßen Lackbindemittels ist im einzelnen folgendes auszuführen :

(A) Als Komponente (A) kommen übliche ethylenisch ungesättigte Verbindungen mit einer tertiären Aminogruppe in Betracht, wie tertiäre Amino-(meth)acrylester z. B. Dialkylaminoalkyl(meth)acrylate mit 1 bis 8, vorzugsweise 1 bis 4 Kohlenstoffatomen in den Alkylgruppen, z. B. N,N-Dimethylaminoethylmethacrylat, N,N-Diethylaminoethylacrylat, oder tertiäre Amino(meth)acrylamide z. B. Dialkylaminoalkyl(meth)acrylamide mit 1 bis 8, vorzugsweise 1 bis 4 Kohlenstoffatomen in den Alkylgruppen, wie N,N-Diethylaminopropyl(meth)acrylamid oder N,N-Dimethylaminopropyl(meth)acrylamid.

Komponente (A) ist im erfindungsgemäßen Lackbindemittel in Mengen von 6 bis 22, vorzugsweise 6 bis 15, insbesondere 8 bis 13 Gew.% einpolymerisiert, wobei tertiäre Amino(meth)acrylamide besonders bevorzugt sind.

(B) Die Komponente (B) ist ein Addukt aus einem N-(1-alkenyl)-isocyanat und einem CH-, OH- oder NH-aciden Verkappungsmittel. Geeignete N-(1-alkenyl)-isocyanate sind solche mit 2 bis 4 Kohlenstoffatomen in der Alkylgruppe, vorzugsweise Vinylisocyanat und/oder Propenylisocyanat. Als Verkappungsmittel zur Herstellung der Komponente (B) können beispielsweise Monophenole wie Phenol, Kresol, Trimethylphenol, primäre Alkohole, oder sekundäre Alkohole wie Isopropanol oder Cyclohexanol, tertiäre Alkohole, wie t-Butanol, t-Amylalkohol, leicht enolisierbare Verbindungen, wie Acetessigester, Acetylaceton, Malonsäurederivate, wie Malonsäurediester mit 1 bis 8 Kohlenstoffatomen in der Alkoholkomponente, Malonsäuredinitril, sekundäre aromatische Amine, wie N-Methylanilin, N-Methyltoluidin, N-Phenyltoluidin, Imide, wie Succinimid oder Phthalimid, Lactame wie ε-Caprolactam, δ-Valerolactam, Laurinlactam sowie Oxime, wie Acetonoxim, Butanonoxim und Cyclohexa nonoxim sowie aromatische Triazole, wie Triazabenzol, eingesetzt werden. Besonders bevorzugt als Verkappungsmittel der N-(1-alkenyl)-isocyanate sind t-Butanol, Cyclohexanol, Caprolactam und Methylethylketonoxim.

Die Herstellung des verkappten N-(1-alkenyl)-isocyanats, wie z. B. des verkappten Vinylisocyanats kann z. B. nach einer Analogievorschrift in Houben-Weyl, Methoden der organischen Chemie, Band 14/2 (1963), Seite 61 bis 70 erfolgen. Sie wird vorzugsweise in Gegenwart von Lösungsmittel durchgeführt. Bei der Umsetzung des N-(1-alkenyl)-isocyanats, z. B. des Vinylisocyanats, mit dem Verkappungsmittel werden etwa äquimolare Mengen eingesetzt. Ein Überschuß des Isocyanats ist zu vermeiden, da dies später zu Vernetzungen Anlaß geben könnte.

Komponente (B) ist in einer Menge von 10 bis 35, vorzugsweise 15 bis 25 Gew.% im erfindungsgemäßen Copolymerisat einpolymerisiert.

(C) Die Komponente (C) ist ein Umsetzungsprodukt aus

(a) einem Epoxidharz aus Bisphenol A und Epichlorhydrin mit einem Molekulargewicht zwischen 300 und 3 500,

(b) einer polymerisierbaren olefinisch ungesättigten Carbonsäure mit 3 bis 20 Kohlenstoffatomen,

(c) einem sekundären Amin und gegebenenfalls

(d) einer gesättigten aliphatischen Monocarbonsäure mit 1 bis 20 Kohlenstoffatomen.

Als Epoxidharze (a) aus Bisphenol A und Epichlorhydrin mit einem Molekulargewicht zwischen 300 und 3 500 kommen im allgemeinen solche mit mindestens 2 Epoxidgruppen pro Molekül, beispielsweise solche mit einem Epoxidwertbereich von 0,05 bis 0,5 in Frage.

Bevorzugt sind Epoxidharze mit einem mittleren Molekulargewicht von 370 bis 1 400, besonders bevorzugt ist ein mittleres Molekulargewicht von 800 bis 1 100.

Als olefinisch ungesättigte Carbonsäuren mit 3 bis 20 Kohlenstoffatomen (b) können beispielsweise verwendet werden copolymerisierbare α,β-olefinisch ungesättigte Monocarbonsäuren wie Acrylsäure, Methacrylsäure, Crotonsäure sowie Halbester von α,β-olefinisch ungesättigten Dicarbonsäuren wie Maleinsäurehalbester, Mesaconsäurehalbester, wobei beispielsweise Halbester von C1- bis C20-, vorzugsweise C3- bis C8-Alkanolen in Frage kommen.

Als sekundäres Amin (c) können solche der allgemeinen Formel

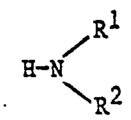

verwendet werden, worin $R^1$ und $R^2$ untereinander gleich oder verschieden sind und für Reste

$C_nH_{2n+1}$ mit n = 1 bis 10,
$C_nH_{2n}OH$ mit n = 1 bis 10, vorzugsweise 2 bis 4,
cycloaliphatische Reste $C_nH_{2n-1}$ mit n = 4 bis 8, vorzugsweise 5 bis 7.

oder aromatische Reste, wie z. B. Phenylreste und araliphatische Reste, wie z. B. Benzylreste stehen oder $R^1$ und $R^2$ miteinander zu einem Ring verbunden sein können. Bevorzugt sind sekundäre Alkanolamine. Besonders bevorzugt sind Methylethanolamin und Diethanolamin.

(d) Als gegebenenfalls mitzuverwendende gesättigte aliphatische Monocarbonsäure mit 1 bis 20 C-Atomen kommen z. B. Ameisensäure, Essigsäure, Propionsäure, Buttersäure, Valeriansäure usw. in Betracht. Bevorzugt sind Ameisensäure und Essigsäure.

Das Epoxidharz auf Basis Bisphenol A und Epichlorhydrin ist im allgemeinen zu 10 bis 50 Mol.%, vorzugsweise 40 bis 50 Mol.% der Epoxidgruppen mit einer polymerisierbaren olefinisch ungesättigten Monocarbonsäure verestert, zu 10 bis 50 Mol.%, vorzugsweise 10 bis 40 Mol.% der Epoxidgruppen mit einem sekundären Amin umgesetzt und mit bis zu 80 Mol.% der Epoxidgruppen, vorzugsweise 10 bis 50 Mol.% mit einer aliphatischen Monocarbonsäure verestert.

Besonders bevorzugt ist das Umsetzungsprodukt eines Epoxidharzes mit dem mittleren Molekulargewicht von etwa 900 und 40 bis 50 Mol.% Acrylsäure oder Methacrylsäure, 20 bis 50 Mol.% Diethanolamin oder Methylethanolamin und 0 bis 40 Mol.% Essigsäure oder Ameisensäure.

Komponente (C) ist im erfindungsgemäßen Copolymerisat in einer Menge von 30 bis 60, vorzugsweise 35 bis 50 Gew.% einpolymerisiert.

(D) Als Komponente (D) kommen andere, unter (A) bis (C) nicht genannte copolymerisierbare olefinisch ungesättigte Verbindungen in Betracht, wie Ester der Acryl- oder Methacrylsäure mit Monoalkoholen, die 1 bis 18, vorzugsweise 1 bis 8 Kohlenstoffatome aufweisen, z. B. Methylacrylat, Ethylacrylat, Butylacrylat, 2-Ethylhexylacrylat und Methylmethacrylat. Des weiteren kommen alle anderen copolymerisierbaren ungesättigten Verbindungen in Frage, insbesondere Vinylester von Carbonsäuren mit 2 bis 10 Kohlenstoffatomen, wie Vinylacetat, Vinylpropionat und Vinylpivalat, Vinylaromaten, wie z. B. Styrol, Acrylnitril und olefinisch ungesättigte Triglyceride, wie isomerisiertes Leinöl sowie Gemische der genannten Monomeren.

Komponente (D) ist im erfindungsgemäßen Copolymerisat in einer Menge von 0 bis 54, vorzugsweise 10 bis 44 Gew.%, einpolymerisiert.

Die Herstellung der erfindungsgemäßen Copolymeren erfolgt zweckmäßigerweise in hydroxylgruppenfreien Lösungsmitteln, wie z. B. Ethern, wie Tetrahydrofuran oder Estern, wie Essigester oder n-Butylacetat oder Aromaten wie Toluol, in Gegenwart radikalbildender Initiatoren, wie Azobiscarbonsäureamiden, Azobiscarbonsäurenitrilen oder Peroxiden im allgemeinen bei Temperaturen zwischen 50 bis 120 °C, vorzugsweise zwischen 60 und 90 °C, gegebenenfalls in Gegenwart von Reglern, wie Mercaptoethanol, t-Dodecylmercaptan oder Diisopropylxanthogendisulfid.

Beispiele für besonders bevorzugte Lackbindemittel sind Copolymerisate aus 8 bis 13 Gew.% N,N-Dimethylaminopropyl(meth)acrylamid, 15 bis 25 Gew.% mit Caprolactam oder Methylethylketonoxim verkapptem Vinylisocyanat, 35 bis 50 Gew.% eines Umsetzungsproduktes aus einem Epoxidharz aus Bisphenol A und Epichlorhydrin mit einem mittleren Molekulargewicht von 900 und einem Gemisch aus Acrylsäure, Diethanolamin und Essigsäure und 12 bis 42 Gew.% 2-Ethylhexylacrylat.

Die erfindungsgemäßen Copolymerisate sind unvernetzte Produkte mit einem mittleren Molekulargewicht zwischen 1 000 und 20 000, vorzugsweise zwischen 2 000 und 10 000 (gemessen mit dem Dampfdruckosmometer). Die K-Werte (nach Fikentscher ; 3 %ig in Eisessig) liegen dementsprechend zwischen etwa 15 und 35, vorzugsweise zwischen 18 und 24.

Die Copolymerisate können nach ihrer Herstellung noch quaterniert werden. Dazu werden sie in Gegenwart von Säure mit Epoxiden wie Ethylenoxid, Propylenoxid, Butylenoxid oder Glycid umgesetzt oder mit Alkylierungsmitteln wie Methyljodid oder Dimethylsulfoxid behandelt.

Die erfindungsgemäßen Copolymerisate enthalten tertiäre Aminogruppen, gegebenenfalls quaternäre Ammoniumgruppen, verkappte Isocyanatgruppen, Ethergruppen und Hydroxylgruppen.

Die erfindungsgemäßen Copolymerisate werden im allgemeinen als Lackbindemittel verwendet und sind durch zumindest teilweise Salzbildung mit Säuren wasserlöslich bzw. wasserdispergierbar.

Die Copolymerisate werden dazu zumindest teilweise mit Säuren neutralisiert. Als Neutralisationsmittel können organische und anorganische Säuren dienen. Bevorzugt sind Essigsäure, Milchsäure und Gluconsäure. Der Neutralisationsgrad für die Anwendung der erfindungsgemäßen Lackbindemittel in wäßrigem Medium liegt zwischen 10 und 120 %.

Bei der Verwendung des erfindungsgemäßen Bindemittels können im Lack polyfunktionelle Vernetzungsmittel, wie hydroxylgruppenhaltige Polymere, Polyester oder Polyadditionsverbindungen wie z. B. Aminoplaste oder Phenol-Formaldehyd-Harze, sowie Pigmente wie z. B. Titandioxid, Talkum und Ruß je nach Anwendungszweck in Mengen von 10 bis 80, vorzugsweise 20 bis 65 Gew.-Teilen, bezogen auf 100 Gew.-Teile Bindemittel enthalten sein. Darüber hinaus können anorganische und organische Buntpigmente in Mengen von ebenfalls bis zu 5 Gew.-Teilen enthalten sein. Verlaufsmittel können bis zu 10 Teilen, Wachse zur Erhöhung der Kratzfestigkeit bis zu 10 Teilen und Katalysatoren für die

Entkappungsreaktion wie z. B. Dibutylzinndilaurat in Mengen von bis zu 2 Teilen, jeweils bezogen auf 100 Teile Bindemittel vorhanden sein.

Die erfindungsgemäßen Lackbindemittel werden insbesondere für die kathodische Elektrotauchlackierung verwendet, und zwar sowohl als selbstvernetzende wie auch als fremdvernetzende Bindemittel.

Mit den erfindungsgemäßen Elektrotauchlacken lassen sich vor allem metallische Gegenstände, z. B. aus Eisen, Stahl und Aluminium beschichten.

Die Herstellung der kationischen Elektrotauchbäder erfolgt wie üblich, beispielsweise wie in W. Machu, Elektrotauchlackierung (1974), S. 155ff, beschrieben. Der Feststoffgehalt der Elektrotauchbäder liegt im allgemeinen zwischen 5 und 25 Gew.%, der pH-Wert zwischen 4,0 und 7,5.

Die mit dem erfindungsgemäßen Bindemittel erhaltenen Überzüge weisen eine hohe Härte auf, sind sehr elastisch, chemikalienbeständig, besitzen einen guten Korrosionsschutz, eine gute Naßfilmhaftung und eine gute Pigmentbenetzung. Dieses hohe Eigenschaftsniveau der Lacke wird durch die Badalterung nicht negativ beeinflußt. Insbesondere weisen die erfindungsgemäßen Lackbindemittel auch im pigmentierten Zustand eine sehr gute Badstabilität auf.

Die in den Beispielen genannten Teile und Prozente sind, soweit nicht anders angegeben, Gewichtsteile bzw. Gewichtsprozente.

## Herstellung der Komponente (B)

(B1) N-Vinylcarbaminsäure-tert.-Butylester

In einem Reaktionsgefäß, versehen mit einem Intensivkühler (mit Kühlsohle), Rührer, Thermometer und Zulaufgefäß werden 69 Teile Vinylisocyanat und 70 Teile Ethylacetat vorgelegt. Bei 40 °C werden innerhalb von 1 Stunde 74 Teile tert.-Butanol, 73 Teile Ethylacetat und 0,01 % Dibutylzinndilaurat zugegeben. Anschliessend läßt man noch 10 Stunden bei 40 °C nachreagieren. Es entsteht eine hellgelbe klare Lösung. Isocyanatgehalt (verkappt) : 14,7 %.

(B2) N-Vinylcarbaminsäure-cyclohexylester

In einem Reaktionsgefäß werden 69 Teile Vinylisocyanat und 89,5 Teile Ethylacetat vorgelegt und auf 40 °C aufgeheizt. Dazu wird innerhalb von einer Stunde eine Mischung aus 110 Teilen Cyclohexanol, 89,5 Teilen Ethylacetat und 0,02 % Dibutylzinndilaurat als Katalysator gegeben. Nachreaktionszeit : 2 Stunden bei 40 °C. Man erhält eine hellgelbe Lösung, aus der sich beim Abkühlen das Reaktionsprodukt in Form von Kristallen abscheidet. Isocyanat-Gehalt (verkappt) : 11,7 %.

(B3) N(N'-Vinyl-carbamoyl)caprolactam

In einem Reaktionsgefäß werden 113 Teile ε-Caprolactam, 91 Teile Ethylacetat und 0,015 % Dibutylzinndilaurat vorgelegt und auf ca. 50 °C aufgeheizt. Dazu wird innerhalb von 1 Stunde eine Mischung aus 69 Teilen Vinylisocyanat und 91 Teilen Ethylacetat zugetropft. Nachreaktionszeit : 5 Stunden. Man erhält eine hellgelbe klare Lösung. Isocyanat-Gehalt (verkappt) : 11,5 %.

## Herstellung der Komponente (C)

(C1) (für Vergleichspolymer)

150 Teile Allylalkohol, 124,1 Teile Acrylsäure, 1,25 Teile Bortrifluorid-Diethyletheratlösung und 2,42 Teile Hydrochinon werden unter Stickstoff auf 90 °C erhitzt. Zulauf 1, bestehend aus 2 154,75 Teilen eines Epoxidharzes auf Basis Bisphenol A und Epichlorhydrin mit einem mittleren Molekulargewicht von 900 und einem Epoxidwert von 0,21, z. B. ®Epikote 1 001 und 718,25 Teilen Methylethylketon, und Zulauf 2, bestehend aus 1,25 Teilen Bortrifluorid-Diethyletheratlösung und 100 Teilen Methylethylketon werden gleichzeitig innerhalb von 2,5 Stunden bei 90 °C zudosiert. Die Temperatur wird noch 1 Stunde bei 90 °C gehalten, dann wird gekühlt.

Man erhält eine gelbliche klare Lösung mit einem Epoxidwert von 0,00 und einem Feststoffgehalt von 73,4 %.

(C2) Zu 475 Teilen des unter (C1) genannten Epoxidharzes und 317 Teilen Methylethylketon gibt man bei 60 °C innerhalb von einer Stunde gleichmäßig 52,57 Teile Diethanolamin. Man läßt 2 Stunden bei 60 °C reagieren und gibt dann innerhalb von einer Stunde gleichmäßig 36 Teile Acrylsäure und 0,56 Teile Hydrochinon hinzu. Man läßt 3 Stunden bei 60 °C rühren und erhält eine gelbliche klare Lösung mit einem Epoxidwert von 0,00 und einem Feststoffgehalt von 63,2 %.

(C3) Zu 475 Teilen des unter (C1) genannten Expoxidharzes und 317 Teilen Methylethylketon gibt man bei 60 °C innerhalb von einer Stunde gleichmäßig 21 Teile Diethanolamin. Man läßt eine Stunde bei 60 °C reagieren und gibt dann innerhalb von 1 Stunde gleichmäßig 24 Teile Essigsäure, 28,8 Teile Acrylsäure und 0,56 Teile Hydrochinon hinzu. Man läßt bei 70 °C rühren bis der Epoxidwert von 0,00 erreicht ist. Man erhält eine klare Lösung mit einem Feststoffgehalt von 60,5 %.

## Herstellung der Copolymerisatlösungen

Polymer 1 (Vergleichspolymer)

In einem mit Rührer, Rückflußkühler und Innenthermometer ausgestatteten Reaktionsgefäß werden

30 % des Zulaufs vorgelegt. Der Zulauf besteht aus 400 Teilen des Addukts (B3), 817 Teilen der Komponente (C1), 60 Teilen Dimethylaminopropylmethacrylamid, 140 Teilen 2-Ethylhexylacrylat, 5 Teilen t-Dodecylmercaptan, 20 Teilen Azobisisobutyronitril und 249 Teilen Essigsäureethylester. Die Vorlage wird unter Stickstoff auf 80 °C aufgeheizt. Der Zulauf wird innerhalb von 3 Stunden bei 80 °C zugegeben. Dann wird eine Stunde nachpolymerisiert, 5 Teile Azobisisobutyronitril hinzugegeben und noch 1 Stunde bei 80 °C nachpolymerisiert. Man erhält eine klare Lösung eines Harzes mit dem K-Wert von 22,4 und dem Feststoffgehalt von 59,8 %.

Polymer 2 (Vergleichspolymer)

Das Polymer wurde gemäß der US-A-4 085 161, Beispiel 5, hergestellt. Als verkappte Isocyanatkomponente wurde das Addukt aus 2-Hydroxyethylacrylat, Toluylendiisocyanat und 2-Ethylhexanol gemäß US-A-3 883 483 verwendet. Man erhält eine Lösung eines Harzes mit einem K-Wert von 19,2 und dem Feststoffgehalt von 56,0 %.

Polymer 3 (erfindungsgemäß)

Wie bei Polymer 1 beschrieben, wird eine Polymerlösung aus 800 Teilen des Addukts (B3), 1 615 Teilen der Komponente (C2), 180 Teilen Dimethylaminopropylmethacrylamid, 420 Teilen 2-Ethylhexylacrylat, 80 Teilen Merkaptoethanol, 40 Teilen Azobisisobutyronitril und 60 Teilen Toluol hergestellt. Nach der Polymerisation wird mit 262 Teilen Isodecanol verdünnt. Man erhält eine klare Lösung eines Harzes mit einem Feststoffgehalt von 60,8 % und einem K-Wert von 20,7.

Polymer 4 (erfindungsgemäß)

Wie bei Polymer 1 beschrieben, wird eine Polymerlösung aus 400 Teilen des Addukts (B3), 831 Teilen der Komponente (C3), 90 Teilen Dimethylaminopropylmethacrylamid, 210 Teilen 2-Ethylhexylacrylat, 35 Teilen Merkaptoethanol, 20 Teilen Azobisisobutyronitril und 4 Teilen Toluol hergestellt. Nach der Polymerisation wird mit 131 Teilen Isodecanol verdünnt. Man erhält eine klare Lösung eines Harzes mit einem Feststoffgehalt von 59,8 % und einem K-Wert von 21,3.

Polymer 5 (erfindungsgemäß)

Wie bei Polymer 1 beschrieben, wird eine Polymerlösung aus 400 Teilen des Addukts (B3), 497 Teilen der Komponente (C3), 90 Teilen Dimethylaminopropylmethacrylamid, 410 Teilen 2-Ethylhexylacrylat, 35 Teilen Merkaptoethanol, 20 Teilen Azobisisobutyronitril und 139 Teilen Toluol hergestellt. Nach der Polymerisation wird mit 131 Teilen Isodecanol verdünnt. Man erhält eine klare Lösung eines Harzes mit einem Feststoffgehalt von 59,5 % und einem K-Wert von 19,2.

## Vergleichsbeispiele

Elektrotauchlack 1

125 Teile der Lösung des Polymeren 1 (59,8 %ig), 45 Teile Titandioxid z. B. Tioxide RTC 90, 1,3 Teile Essigsäure und 823 Teile Wasser werden mit Hilfe einer Kugelmühle zu einer Dispersion mit einem Feststoffgehalt von 12 Gew.% verarbeitet.

Elektrotauchlack 2

139,5 Teile der Lösung des Polymeren 2 (56,0 %ig), 45 Teile Titandioxid, 2,7 Teile Essigsäure und 810 Teile Wasser werden mit Hilfe einer Kugelmühle zu einer Dispersion mit einem Feststoffgehalt von 12 Gew.% verarbeitet.

## Erfindungsgemäße Elektrotauchlacke

Elektrotauchlack 3

123 Teile der Lösung des Polymeren 3 (60,8 %ig), 45 Teile Titandioxid,
1,16 Teile Essigsäure und 831 Teile Wasser werden mit Hilfe einer Kugelmühle zu einer Dispersion mit einem Feststoffgehalt von 12 Gew.% verarbeitet.

Elektrotauchlack 4

125 Teile der Lösung des Polymeren 4 (59,8 %ig), 45 Teile Titandioxid,
0,89 Teile Essigsäure und 829 Teile Wasser werden mit Hilfe einer Kugelmühle zu einer Dispersion mit einem Feststoffgehalt von 12 Gew.% verarbeitet.

Elektrotauchlack 5

126 Teile der Lösung des Polymeren 5 (59,5 %ig), 45 Teile Titandioxid, 0,87 Teile Essigsäure und 828 Teile Wasser werden mit Hilfe einer Kugelmühle zu einer Dispersion mit einem Feststoffgehalt von 12 Gew.% verarbeitet.

Mit diesen Elektrotauchlacken wurden während einer Abscheidezeit von 2 Minuten zinkphosphatierte Bleche beschichtet, die anschließend bei 190 °C 30 Minuten lang eingebrannt wurden. Die Eigenschaften der Elektrotauchlacke und der damit kataphoretisch beschichteten Bleche sind nachfolgender Tabelle zu entnehmen.

| Elektrotauchlack-Nr. | Vergleichsbeispiele | | Erfindungsgemäße Elektrotauchlacke | | |
|---|---|---|---|---|---|
| | 1 | 2 | 3 | 4 | 5 |
| Pigmentbenetzung | nicht einwandfrei | schlecht | gut | gut | gut |
| pH-Wert | 5,2 | 6,2 | 6,2 | 5,2 | 6,2 |
| Abscheidespannung [V] | 35 | 40 | 105 | 120 | 150 |
| Schichtdicke [µm] | 16 | 11 | 22 | 21 | 22 |
| Erichsen-Tiefung [mm] (DIN 53156) | 5,5 | 5,4 | 6,0 | 5,7 | 6,9 |
| Korrosionsschutz [Std./mm] (SS DIN 50021) | 240/10 | 168/6 | 760/5,0 | 480/6,0 | 240/4,5 |
| Naßfilmhaftung | schlecht | schlecht | gut | gut | gut |

## Patentansprüche

1. Lackbindemittel auf Basis eines tertiäre Aminogruppen, verkappte Isocyanatgruppen, Hydroxyl- und Ethergruppen enthaltenden Copolymerisats, das durch zumindest teilweise Salzbildung mit einer Säure wasserlöslich oder wasserdispergierbar ist, dadurch gekennzeichnet, daß das Copolymerisat einpolymerisiert enthält :

(A) 6 bis 22 Gew.% mindestens einer olefinisch ungesättigten Verbindung, die eine tertiäre Aminogruppe enthält,

(B) 10 bis 35 Gew.% eines mit einem CH-, OH- oder NH-aciden Verkappungsmittel verkappten N-(1-alkenyl)-isocyanats,

(C) 30 bis 60 Gew.% eines Addukts aus

(a) einem Epoxidharz auf der Basis von Bisphenol A und Epichlorhydrin mit einem Molekulargewicht zwischen 300 und 3 500,

(b) einer polymerisierbaren olefinisch ungesättigten Carbonsäure mit 3 bis 20 Kohlenstoffatomen,

(c) einem sekundären Amin und gegebenenfalls

(d) einer gesättigten aliphatischen Monocarbonsäure mit 1 bis 20 Kohlenstoffatomen,

wobei 10 bis 50 Mol.% der Epoxidgruppen des Epoxidharzes (a) mit einer polymerisierbaren olefinisch ungesättigten Monocarbonsäure verestert, 10 bis 50 Mol.% der Epoxidgruppen mit einem sekundären Amin umgesetzt und gegebenenfalls bis zu 80 Mol.% der Epoxidgruppen mit einer aliphatischen Monocarbonsäure verestert sind,

(D) 0 bis 54 Gew.% einer oder mehrerer unter (A) bis (C) nicht genannter copolymerisierbarer olefinisch ungesättigter Verbindungen,

mit der Maßgabe, daß das Copolymerisat ein mittleres Molekulargewicht zwischen 1 000 und 20 000 aufweist und die Summe der unter (A) bis (D) genannten Prozentzahlen 100 ist.

2. Lackbindemittel nach Anspruch 1, dadurch gekennzeichnet, daß als Komponente (B) ein Addukt aus Vinylisocyanat oder Propenylisocyanat und Cyclohexanol, t-Butanol, ε-Caprolactam oder Methylethylketonoxim im Molverhältnis Isocyanat/Verkappungsmittel 1 : 1 verwendet wird.

3. Lackbindemittel nach Anspruch 1 oder 2, dadurch gekennzeichnet, daß das Äquivalenzverhältnis der reaktiven Wasserstoffatome der Komponente (C) zu den verkappten Isocyanatgruppen der Komponente (B) etwa 1 : 1 beträgt.

4. Lackbindemittel nach einem der vorhergehenden Ansprüche, dadurch gekennzeichnet, daß als Komponente (C) ein Addukt aus (a) einem Epoxidharz auf der Basis von Bisphenol A und Epichlorhydrin mit einem Molekulargewicht zwischen 300 und 3 500 und (b) Acrylsäure oder Methacrylsäure, (c) Diethanolamin oder Methylethanolamin und (d) Essigsäure oder Ameisensäure verwendet wird.

5. Verwendung des Lackbindemittels nach einem der vorhergehenden Ansprüche als selbstvernetzendes Bindemittel für die kathodische Elektrotauchlackierung metallischer Gegenstände.

6. Verwendung des Lackbindemittels nach einem der Ansprüche 1 bis 4 in Kombination mit einem polyfunktionellen Vernetzungsmittel als fremdvernetzendes Bindemittel für die kathodische Elektrotauchlackierung metallischer Gegenstände.

**Claims**

1. A surface coating binder based on a copolymer which contains tertiary amino groups, blocked isocyanate groups, hydroxyl groups and ether groups, and is water-soluble or water-dispersible as a result of partial or complete salt formation with an acid, wherein the copolymer contains, as copolymerized units,

(A) from 6 to 22 % by weight of one or more olefinically unsaturated compounds which contain a tertiary amino group,

(B) from 10 to 35 % by weight of an N-(1-alkenyl)-isocyanate which is blocked by means of a CH-, OH- or NH-acidic blocking agent,

(C) from 30 to 60 % by weight of an adduct obtained from

(a) an epoxy resin based on bisphenol A and epichlorohydrin and having a molecular weight of from 300 to 3 500,

(b) a polymerizable, olefinically unsaturated carboxylic acid of 3 to 20 carbon atoms and

(c) a secondary amine, with or without

(d) a saturated aliphatic monocarboxylic acid of 1 to 20 carbon atoms,

from 10 to 50 mole % of the epoxide groups of epoxy resin (a) being esterified with a polymerizable, olefinically unsaturated monocarboxylic acid, from 10 to 50 mole % of the epoxide groups being reacted with a secondary amine, and, if desired, up to 80 mole % of the epoxide groups being esterified with an aliphatic monocarboxylic acid, and

(D) from 0 to 54 % by weight of one or more copolymerizable, olefinically unsaturated compounds not mentioned under (A) to (C),

with the proviso that the copolymer has a mean molecular weight of from 1 000 to 20 000 and the sum of the percentages given under (A) to (D) is 100.

2. A surface coating binder as claimed in claim 1, wherein an adduct of vinyl isocyanate or propenyl isocyanate with cyclohexanol, t-butanol, ε-caprolactam or methyl ethyl ketoxime, in which the molar ratio of isocyanate to blocking agent is 1 : 1, is used as component (B).

3. A surface coating binder as claimed in claim 1 or 2, wherein the ratio of the number of equivalents of reactive hydrogen atoms of component (C) to the number of equivalents of blocked isocyanate groups of component (B) is about 1 : 1.

4. A surface coating binder as claimed in any of the preceding claims, wherein there is used as component (C) an adduct of (a) an epoxy resin based on bisphenol A and epichlorohydrin and having a molecular weight of from 300 to 3 500, (b) acrylic acid or methacrylic acid, (c) diethanolamine or methylethanolamine and (d) acetic acid or formic acid.

5. The use of a surface coating binder as claimed in any of the preceding claims as a self-crosslinking binder for the cathodic electrocoating of metal articles.

6. The use of a surface coating binder as claimed in any of claims 1 to 4 in combination with a polyfunctional crosslinking agent as an externally crosslinking binder for the cathodic electrocoating of metal articles.

**Revendications**

1. Liant pour peinture, à base d'un copolymérisat, contenant des groupes amino tertiaires, des groupes isocyanate masqués, des groupes hydroxyle et éther, qui est soluble dans l'eau ou dispersable dans l'eau par salification au moins partielle avec un acide, caractérisé par le fait que le copolymérisat contient, introduit en polymérisation :

(A) 6 à 22 % en poids d'au moins un composé à insaturation oléfinique, qui contient un groupe amino tertiaire,

(B) 10 à 35 % en poids d'un N-(1-alcényle)-isocyanate masqué avec un agent de masquage CH-, OH- ou NH-acide,

(C) 30 à 60 % en poids d'un produit d'addition de

(a) une résine époxy à base de bisphénol A et d'épichlorhydrine d'un poids moléculaire compris entre 300 et 3 500,

(b) un acide carboxylique, à insaturation oléfinique, polymérisable, de 3 à 20 atomes de carbone,

(c) une amine secondaire et, éventuellement

(d) un acide monocarboxylique aliphatique saturé, de 1 à 20 atomes de carbone,

10 à 50 % moles des groupes époxy de la résine époxy (a) étant estérifiés avec un acide monocarboxylique, à insaturation oléfinique, polymérisable, 10 à 50 % moles des groupes époxy étant entrés en réaction avec une amine secondaire et, éventuellement, jusqu'à 80 % moles des groupes époxy étant estérifiés avec un acide monocarboxylique âliphatique,

(D) 0 à 54 % en poids d'un ou plusieurs composés à insaturation oléfinique, copolymérisables, non indiqués sous (A) à (C),

sous réserve que le copolymérisat possède un poids moléculaire moyen compris entre 1 000 et 20 000 et que la somme des pourcentages indiqués sous (A) à (D) soit égale à 100.

2. Liant pour peinture selon la revendication 1, caractérisé par le fait que l'on utilise, comme composant (B), un produit d'addition de vinylisocyanate ou propénylisocyanate et de cyclohexanol, t-butanol, ε-caprolactame ou méthyléthylcétonoxime, en rapport molaire, isocyanate/agent de masquage, de 1/1.

3. Liant pour peinture selon la revendication 1 ou 2, caractérisé par le fait que le rapport d'équivalence des atomes d'hydrogène réactifs du composant (C) aux groupes isocyanate masqués du composant (B), est d'environ 1/1.

4. Liant pour peinture selon l'une des revendications précédentes, caractérisé par le fait que l'on utilise, comme composant (C), un produit d'addition de (a) une résine époxy à base de bisphénol A et d'épichlorhydrine, d'un poids moléculaire compris entre 300 et 3 500 et (b) acide acrylique ou méthacrylique, (c) diéthanolamine ou méthyléthanolamine et (d) acide acétique ou formique.

5. Utilisation du liant pour peinture selon l'une des revendications précédentes, comme liant auto-réticulant pour la peinture par électro-immersion d'objets métalliques.

6. Utilisation du liant pour peinture selon l'une des revendications 1 à 4 en combinaison avec un agent de réticulation polyfonctionnelle, comme liant réticulant étranger pour la peinture par électro-immersion d'objets métalliques.